# EUROPEAN PATENT APPLICATION

(11) **EP 4 672 105 A1**
(43) Date of publication of application: **31.12.2025**
(21) Application number: 24184651.8
(22) Date of filing: 26.06.2024
(51) Int. Cl.: G06Q 10/0631, G06N 3/092, G06Q 10/0633, G06Q 10/0639

(54) **METHOD AND SYSTEM FOR PRODUCING PRODUCTS USING AI REINFORCED LEARNING**

(71) Applicant: ETM professional control GmbH, 7000 Eisenstadt (AT)
(72) Inventor: Avasalcai, Cosmin Florin, 1030 Wien (AT); Nae, Vlad, 3002 Purkersdorf (AT); Zahorcak, Vladimir, 900 32 Borinka (SK)
(74) Representative: Siemens Patent Attorneys

(57) **Abstract**

Method for producing a product, wherein skills of a bill of process are executed by production units (166). The production units (166) are associated with an AI (102) with RL capabilities and are adapted to only handle the product within a respective subgroup. The method comprises executing (S110), in a first production cycle, a first process skill by a first production unit to a first product, transferring (S120), the first product from the first production unit to a second production unit within the respective subgroup and executing (S130) a second process skill by the second production unit to the first product. Then, the first production unit receives (S140) feedback information (106) based on at least one key performance indicator. By using the feedback information (106) and by using the AI (102) of the first production unit the next production units (166) from the respective subgroup is selected (S160).

## Description

The invention concerns the industrial production of a product by a plurality of production units on a shopfloor.

The current trend in industrial factory design is to transition from a static shopfloor design purposefully tailored to specific product types to a more dynamic design in which different groups of production units autonomously decide to participate in the production process, depending on the current state (their state, that of the shopfloor, type of product being produced, etc.). Some characteristics of the classic static design are: the production process requires human intervention and often is centered around the human worker, the automated units fulfilling auxiliary roles; the production lines are designed with their units placed and connected with the exclusive goal to facilitate the execution of one product's Bill of Process (BOP) production steps. Thus, changing the targeted product necessitates a redesign, re-setup of the production lines and often retooling which are costly processes both as in direct costs as well as in the required time.

In contrast, the dynamic design aims at solving the scalability issues that a static design has. Additionally, such a dynamic design also offers the required flexibility for lot-size-one production with minimal or even without changes to the factory layout. In this case, there is a desire to limit the manual intervention of personnel and instead employ a semi-autonomous approach to the production. More concretely, the characteristics of the shopfloor dynamic design are: the units do not form a closed loop that focuses only on the production of a single product type; instead the entire shopfloor layout is designed with the goal of maximizing at the level of both unit and production line, considering predefined Key Performance Indicators (KPIs) like optimizing production throughput of all products. Essentially, the layout is optimized for the entire floor instead for a single product at a time; allows for producing a product using different units which are dynamically chosen depending on the live status of the units and production line; offers the possibility to extend the product portfolio without requiring extensive change to the layout.

To enable the dynamic design, new industrial shopfloors emerged consisting of multiple distributed, interconnected, and intelligent cyber-physical production units (CPPUs) placed accordingly around the entire floor. On this type of shopfloors, the production process is distributed between all available CPPUs, with neither a central coordinator, nor planner - each unit being able to process the product's BOP independently. As a result, optimizing the production of all products requires a collaboration between all CPPUs - a task that is not trivial in a distributed context.

An objective is to enable the optimization of the production process on operator selected KPIs. This objective is the primary goal for all industrial factories. The solutions currently being employed in the current state of the art are varied and tackle this goal in a wide range of ways, from the classical custom designed solutions to a more dynamic approach based on heuristic algorithms or AI planners. The two defining factors for the current approaches are: (1) product-bound: they are design-bound to specific products (possibly with several minor variations); any significant change to the product requiring another costly (re-)design phase. (2) factory layout-bound: they are centralized solutions, precomputed at design time based on the fixed factory layout. Alternative solutions exist in which the execution of the BOP manufacturing steps is decided at runtime (i.e., during production), but they are nevertheless also either centralized or rely on an invariant layout.

The statically designed solution optimizes the targeted KPIs in the design phase of the shopfloor by selecting only the necessary units to fulfill the targeted product's BOP. Further KPI optimization is attempted by arranging the production units in a layout tailored for the respective product and by calculating and optimizing the product routing. These solutions are usually extremely good for the targeted KPIs but have the important drawback that they are only valid as long as none of the design parameters change. The statically designed solution will lose efficiency if the product changes and often will require production down-time to redesign in such cases. They are prone to outages due to the lack of redundancy, or limited redundancy (only on the initially identified critical paths). They cannot adapt to a change in the targeted KPIs. Furthermore, static or heuristic solvers provide identical solutions for identical contexts.

One example of a rather static approach is disclosed in WO2016128020A1, wherein product transfer between production modules is organized by a table in a memory.

The dynamic BOP execution with centralized planning is a more modern approach and optimizes the targeted KPIs in a centralized way, not during the design phase but rather at run-time. At the design phase, the factory layout is defined based on the production units' capabilities and their resulting likelihood to work on common areas of the BOP, i.e., grouped on related production processes, often seen grouped in BOP (e.g., bolt fastening units are placed in the vicinity of assemble-capable machines, since it is likely that after two products are assembled, they require screw fastening; or labeling units next to the packaging units and so on). At run-time (i.e., during production) the product transportation through the factory is dynamically determined with the goal of maximizing the targeted KPIs. The advantage over the statically designed solution is that it provides increased flexibility, the layout not being product-bound anymore. The performance in terms of KPI optimization is less efficient for a given product when compared to the statically designed solution for that product, but this is compensated by the introduced flexibility of being able to produce other related products with minimal or even no intervention - being able to switch production from one product to another or even produce them in tandem without a re-design or a re-tooling is the central advantage of this approach. The limitation of this approach is that the run-time decision of the product routing is based on centralized algorithms which require global knowledge of the factory layout and state when executed. This becomes an obstacle when increasing the shopfloor's size and the production unit physical connectivity. These centralized algorithms do neither scale with the number of units, nor with the number of unit interconnections, especially when the product's bill of material (BOM) is complex. Under these conditions, the time required to compute a solution increasing supra-linearly with these parameters.

Therefore, the problem the invention aims to solve is to provide a more flexible approach to producing products.

### Summary of Invention

A first aspect of the invention discloses a method for producing a plurality of products by executing a plurality of production cycles, wherein, in each production cycle, a plurality of skills of a bill of process are executed by a plurality of production units. Each of the plurality of production units is automatically associated with an AI with reinforced learning capabilities. Each of the plurality of production units is adapted to only handle the product within a respective subgroup among the plurality of production units. The method comprises: In a first step, executing, in a first production cycle, a first process skill by a first production unit to a first product of a first type; in a second step, transferring, in the first production cycle, the first product of the first type from the first production unit to a second production unit within the respective subgroup; in a third step, executing, in the first production cycle, a second process skill by the second production unit to the first product of the first type; in a fourth step, receiving, by the first production unit, feedback information based on at least one key performance indicator; in a fifth step, executing, in a second, subsequent production cycle, the first process skill by the first production unit to a second product of the first type; in a sixth step, selecting, by using the feedback information and by using the AI of the first production unit, one of the plurality of production units from the respective subgroup; in a seventh step, transferring, in the second production cycle, the second product of the first type from the first production unit to the selected production unit; and in an eights step, executing, in the second production cycle, a process skill of the selected production unit to the second product of the first type.

By this method, the production may adopt and change at run-time, not only restricted to the production machines' states, but also to those in product routing and even with complete product changes neither requiring physical redesign, nor retooling, nor software/configuration changes. Other changes may be the defect or maintenance of a production unit, which, due to redundancy of the production units, is automatically taken into account by the method. Independent of these significant changes to its input and/or condition, the AI of the production units maintains and eventually further improves the selected KPIs. KPIs may for example be production time, energy efficiency or quality.

Further, this method requires limited knowledge of its environment, significantly reducing the time required to find a solution and increasing the scalability of an associated system. This may in particular be valid when the number of production units is larger than 10, preferably larger than 50, more preferably larger than 100. Accordingly, the product does not have a predefined production path throughout the shopfloor, that is, between the production units. Instead, this is determined at runtime based on the current state of the production units found in the vicinity of the product, the product state, and the experience of the agent. Combining the three allows the agent to provide efficient decisions for scenarios that might appear only from time to time. The method enables continuous improvement in its performance for similar/ identical circumstances (e.g., production units' state, products being produced, product routing state) as the agents learn from being repeatedly exposed to this context. The agent may comprise the AI and both terms may be used interchangeably. The optimum performance in production may be achieved after 50 iterations. Preferably, the optimum is achieved after 100 iterations. When conditions change, that is, when feedback information for the same action changes, optimization may require additional iterations. Frequently reoccurring changes may not require additional interactions, that is additional feedback information, as the agent may select the optimal choice from previous training of the same condition.

The reinforced learning of the AI may be a Multi-Agent Reinforcement Learning (MARL) technique. As reinforcement learning (RL) algorithms, Proximal Policy Optimization (PPO) or Deep Q-Network (DQN) may be used. A knowledge pool, that is the information available for providing feedback information to the AI and the knowledge of the AI itself is limited to only the physical connected units and reward information are shared immediately after an action is taken by the agent. The feedback information may comprise reward information and/or penalty information. Regarding the subgroup of the production unit, a subgroup may not consist of all production units. The production unit may be a cyber-physical production unit.

According to another embodiment, the feedback information is provided based on a plurality of key performance indicators.

According to another embodiment, the key performance indicator may change.

Change of a KPI may result in other feedback information for the same decision of an agent. Thereby, future decision for the next cycles can be influenced in runtime.

According to another embodiment, the product, when transferred between production units follows a path and the path changes depending on a condition of a production unit on the path.

According to another embodiment, the bill of process is a list of skills to be executed by the plurality of production units in a prescribed order.

According to a second aspect of the invention, a system for industrial production of a product of a first type requiring a first bill of process, comprises: a plurality of production units to work the first bill of process; and an AI for each of the plurality of production units having reinforced learning capabilities. Feedback information is provided to at least one of the AIs of the plurality of production units. Each of the plurality of production units is adapted to only handle the product within a respective subgroup among the plurality of production units. The AI is configured to control the associated production unit based on said feedback information.

The advantages of the method according to the first aspect apply to the system accordingly. Further, the system may comprise computing means configured to run the AI.

The proposed solution enables automatic collaborations between production units distributed across the entire shopfloor. Thereby, the system satisfies business requirements associated with the production of products of different types, such that the product can automatically steer its own production based on some product and business KPIs. More concretely, the proposed solution tackles the dynamic scheduling optimization problem, that is, products are efficiently routed through the shopfloor, at runtime, considering the associated BOP and the given KPIs. The system builds on the current state of the art of dynamic BOP execution by using a fully distributed, collaborative machine learning (ML) based optimizer, referred to as agent. The agent does not require a global knowledge of the factory layout and its current state for directing the product within the production line.

Instead, each production unit is associated with an independent agent making independent decisions and acting in collaboration with other agents in its neighborhood or subgroup. In a neighborhood or subgroup, agents can be in physical and/or logical proximity. This reduced information horizon significantly improves scalability. Scalability refers to the number of production units used for a method or present in a system. All planners, in this disclosure referred to as agents, work on a limited subset of information and cannot always guarantee reaching a global optimum. However, this distributed optimizer compensates by employing collaborative machine learning capable of receiving feedback information about the efficiency of its previous decisions and actively learn from it gradually and continuously improving its product routing directing decisions. At the end of the production process of a product, each production unit which contributed to its production receives feedback reflecting each agent's contribution to the achieved KPI performance. Therefore, the agent, that is, the AI, does not require, nor does it receive complete information about all the production units in the factory at any point in time, but rather receives feedback on its concrete decisions and their effect on the entire resulting production chain and learns from it. The main advantage of this agent-based approach, alongside the scalability improvement presented above, is its increased reactivity and responsiveness to sudden changes in the factory state. Because the decisions are based not only on the current state, but especially on the knowledge accumulated by learning from past experiences, it has the potential to match and outperform the current state-of-the-art deterministic or heuristic schedulers, as described above. Where such a scheduler would offer the same rigid solution for a certain state of the factory every time it is encountered, these distributed agents are capable of learning and improving their performance, offering gradually better solutions when faced with the same (or similar) factory states at different points in time.

According to another embodiment, feedback information is provided to all AIs of the plurality production units. Optionally, the feedback information is provided by a reward component.

All AIs of the plurality production units may refer to all production units which participated in the production of the product. That is, idle production units may not receive feedback information.

According to another embodiment, the AI is configured to learn from the reward information thereby influencing the control of the AI of the associated production unit.

According to an optional embodiment, a skill is assigned to the production unit selected from a group comprising at least production and routing.

According to an optional embodiment, each production unit is configured to execute the skills deferring, transporting and/or buffering.

According to an optional embodiment, the production unit is selected from one of the group comprising: robotic arm, conveyor, labeler, packager, laser engraver, loading bay, mill, Kanban, automated guided vehicle (AGV) fleet unit.

According to an optional embodiment, the system is capable of producing a product of a second type, the product of the second type being different of the product of the first type.

Thereby, a change of the product due to a product cycle can be adopted for without changes to the production units, that is, just by changing the BOP.

According to an optional embodiment, the product of the second type is produced according to second bill of process, the second bill of process being different from the first bill of process.

That is, the amount of skills and/or the type of the skill of the second bill of process may be different.

According to an optional embodiment, a plurality of production units used for the first bill of process are used for the second bill of process.

According to an optional embodiment, all production units used for the first bill of process are used for the second bill of process.

According to an optional embodiment, the production unit comprises a controller and a sensor.

According to an optional embodiment, the production units are provided in a redundant manner.

Thereby, defects and/or maintenance may be automatically compensated for.

According to an optional embodiment, an agent comprises the AI. Optionally, the agent may be referred to as RL agent.

### Figures

- Fig. 1: illustrates an overview of a MARL-based collaborative production optimizer.
- Fig. 2: illustrates an optimization scenario of a shopfloor dynamic design.
- Fig. 3: illustrates a first bill of process for a product of a first type and associated production units.
- Fig. 4: illustrates a second bill of process for a product of a second type and associated production units.
- Fig. 5: illustrates a set of routing skills.
- Fig. 6: illustrates an overview of agent's decision making over time when skill found in the neighborhood.
- Fig. 7: illustrates an overview of agent's decision making over time when required skill not in the neighborhood.

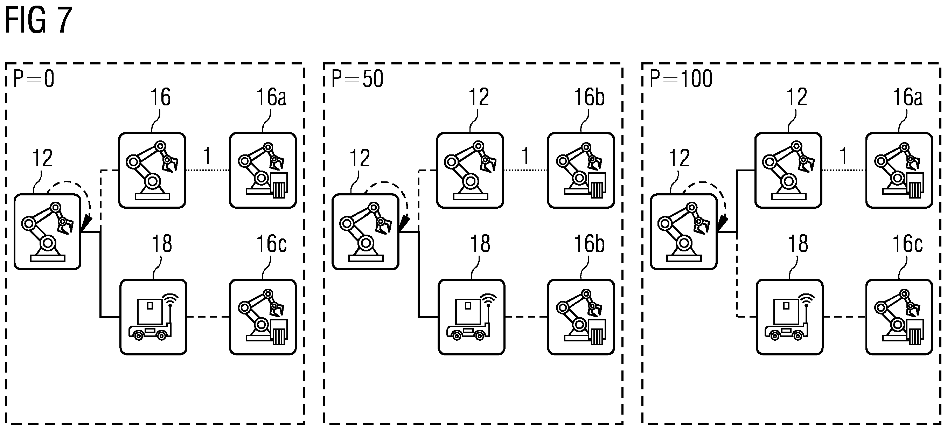

- Fig. 7: illustrates an overview of agent's decision making over time when required skill not in the neighborhood.

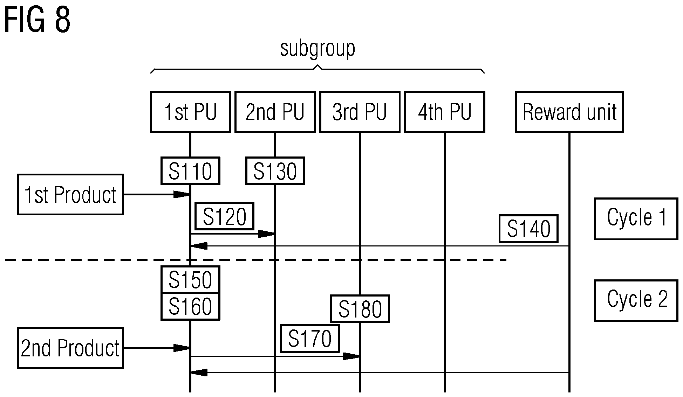

- Fig. 8: illustrates a method according to the present invention.

### Specific Embodiments

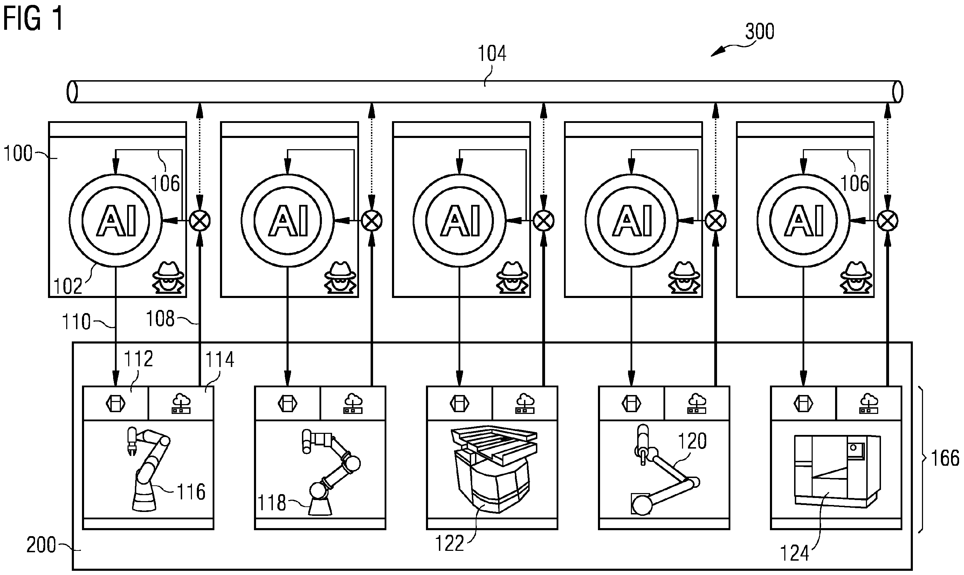

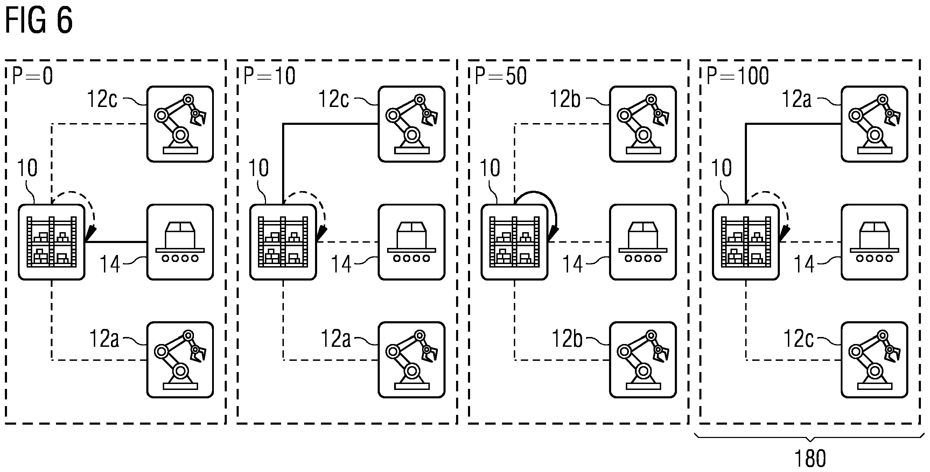

Figure 1 illustrates an overview of a system 300, which may be a MARL-based collaborative production optimizer, wherein each production unit 166 has its own agent 100 connected to its digital twin. The digital twin represents the production unit 166. The digital twin may be identical to the physical production unit 166, at least in functionality. As non-limiting examples of production units 166, a first robot 116, a second robot 118, a third robot 120, a first processing device 122 and a second processing device 124 are shown. The agent 100 includes an AI 102. The production units 166 may be cyber-physical production units and may comprise a controller 112 and a sensor 114. The agent 100 may read the production unit's model, configuration, and/or sensor outputs, and may send commands to the production unit's controller 112. The agent 100 may be located within the production unit 166 or may be divided into a server remote from the production unit 166 and a client on the production unit 166. Further, the system 300 may comprise a reward component 104, configured to providing feedback information 106 to the AI 102. The collaboration of the production units 166 is enabled through two distinct mechanisms. Firstly, as the entire production line, that is all production units 166, participates in the production process, the environment 200 the agents 100 act in is a distributed one, comprising multiple production units 166. This has the advantage that the system 300 is not bound by a floor layout of an existing site or factory. The agents 100 do not see the entire layout but are limited to a subset of production units 166. This subset of production units 166 may be selected based on multiple criteria, such as physical or logical proximity. Therefore, the first collaboration mechanism is through partial state sharing between groups of production units, referred to as subgroups. This will be explained further in connection with Figures 6 and 7. The second collaboration channel involves the production units 166 forming ephemeral teams whose members contribute to the production process of one product instance. The feedback regarding the quality of the production (quantified through selected KPIs) of that particular product instance is received by said team and each of its members, that is each AI 102 of each production unit 166, learns from it. In reinforcement learning, the quality of an action the agent 100, that is the AI 102, takes is quantified through feedback information 106 which may be a reward or a penalty and which, in this system, is shared fairly between all AIs 102 of each production unit 166 participating in a product's production process, based on each AI's 102 decision contribution to the total reward.

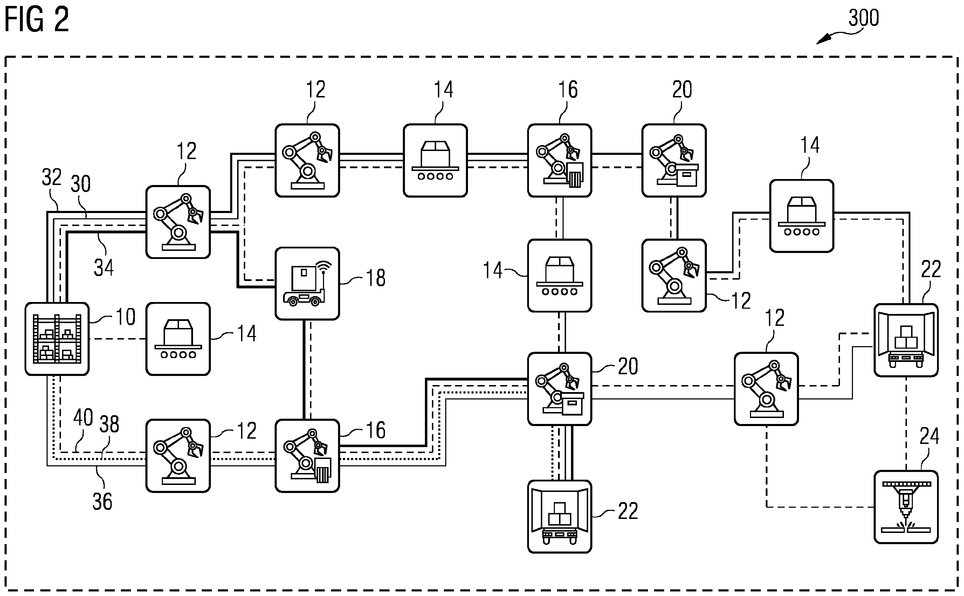

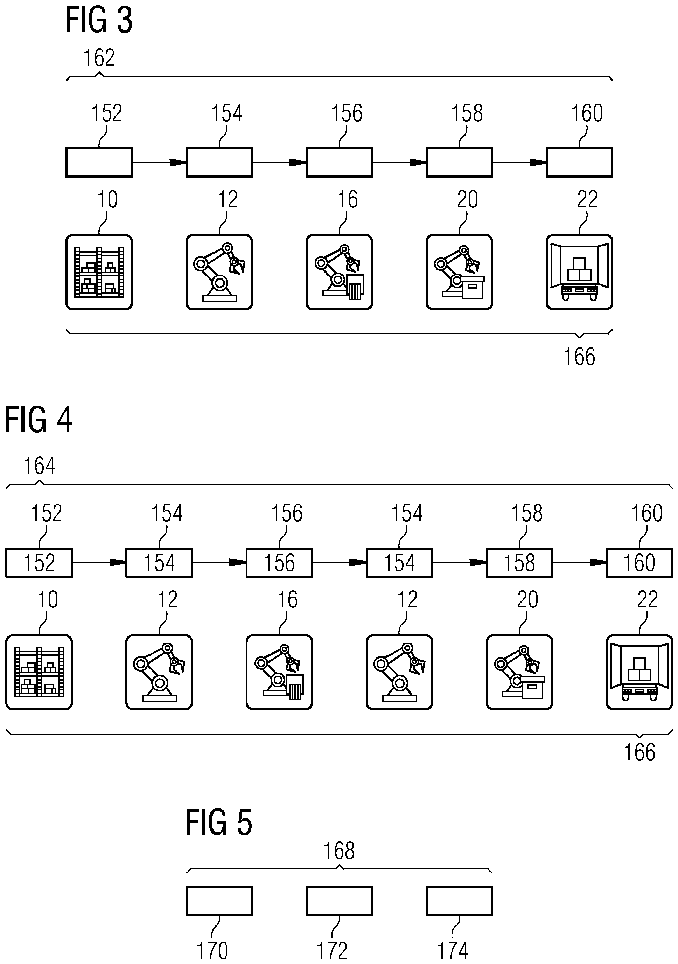

Figure 2 illustrates a production optimization scenario of a shopfloor dynamic design. All previous explanations apply accordingly. In the context of explaining Figure 2, reference will be made to Figure 3 which shows, by way of a non-limiting example, a first bill of process 162. Said first BOP skills 162 are at least "supply 152", "fasten 154", "label 156", "box 158" and "store 160". The skills are executed by production units 166. The mentioned skills may be executed by the illustrated production units 166, that is, respectively, a Kanban unit 10, a robotic arm unit 12, a labeler 16, a packager 20 and a loading bay 22. Additionally, Figure 5 shows product routing skills 168 being at least "defer 170", "transport 172" and "buffer 174". Routing skills 168 may be used for transporting the product between production units 166 associated with BOP skills. All production units may be capable of executing said routing skills 168.

In Figure 2, the advantages of the proposed scheduling solution are explained by way of a non-limiting example of a shopfloor layout following a dynamic design. All production units 166 are distributed across the shopfloor. The production units 166 may have a certain degree of redundancy in capabilities, that is, multiple production units 166 can perform the same production steps allowing for the creation of multiple alternative production paths which are indicated by different numerals 30, 32, 34, 36 and 38 depending on the defined BOP and the current state of experience of the AI based on the feedback information 106. The objective of the shopfloor is to efficiently produce the product whose BOP is presented in Figure 3. In this non-limiting example, two KPIs are considered as optimization criteria: energy consumption and production time. Besides the production steps defined in the BOP, named skills, Figure 3 also presents the production units 166 capable of performing these skills. Each production unit 166 can perform at least one set of skills that can either directly contribute to fulfilling the BOP requirements, named "production skills", or can facilitate the product routing through the factory, named "product routing skills" 168. For example, the Kanban unit 10 offers the "supply" skill 152, while the "fasten" skill 154 can only be performed by a robotic arm unit 12. The shared product routing skills 168, in this non-limiting example as "defer" 170, "transport" 172, and "buffer" 174, may be available at all production units 166 in the factory. The agents 100 use these routing skills 168 to shape the route a product takes through the factory with the goal of optimizing the production process by reacting to changes in the state and the current load factors of the production units 166. "transport" 172 refers to that an agent 100 can choose to transport a product to a neighboring, connected production unit 166. "Defer" 170 refers to that an agent 100 can choose to defer an action and keep the product in place, until a certain production unit 166 becomes available to handle it. This may be required when multiple actions have to be taken within a certain amount of time without intermediate delay. "Buffer" 174 refers to that an agent 100 can use the buffer skill to temporarily store the product locally with the goal of avoiding product congestion.

The shopfloor in Figure 2 comprises a Kanban unit 10 for supplying the product. The Kanban unit 10 is connected to a first robotic arm 12 (top), following paths 30, 32 and 34, a second robotic arm 12 (bottom), following paths 36 and 38 and a first conveyor 14. The first robotic arm 12 is connected to a third robotic arm 12 (top), following paths 30 and 32, and a AGV fleet unit 18, following path 34. Further following path 34, the AGV fleet unit 18 is connected with a first labeler 16. The first labeler 16 is connected with the second robotic arm 12 and a first packager 20, which connection is taken by paths 34, 36 and 38. Following path 30 and 32, the third robotic arm 12 is connected to a second conveyor 14 which is only connected to a second labeler 16. The second labeler 16 is connected to a third conveyor 14, following path 30, which is only connected to the first packager 20. The first packager 20 is connected with the first loading bay 22, to which paths 30, 34 and 38 are guided and to a fourth robotic arm 12, to which path 36 extends. Fourth robotic arm 12 is connected to a laser engraver 24 and a second loading bay 22, to which path 36 extends. Turning back to the second labeler 16, it is also connected to a second packager 20, to which path 32 extends. The second packager 20 is connected to a fifth robotic arm 12, which is only connected to a fourth conveyor 14, which is only connected to the second loading bay 22. Path 32 extends along this route to the second loading bay 22.

To illustrate the product of the first type's routing resulting from the agents' 100 decision processes, which is based on the AI 102, the production path 30 in Figure 2 is further explained stepwise in successive scenarios, each one describing a specific decision point. Furthermore, given the described redundancy in capabilities and the resulting possible production paths, the performance achieved by the production units 166 becomes highly relevant and is, therefore, discriminated by efficiency, that is, a path with the highest efficiency 30 ("optimal"), a path with medium high efficiency 32, a path with medium efficiency 34, a path with medium low efficiency 36 through to a path with low efficiency 38 ("nonoptimal"). All paths aim to implement the first bill of process 162 as shown in Figure 3. Since the product is available at the Kanban unit 10, the supply skill 152 may be executed automatically by introducing it to the production line. Then, the agent 100 on that production unit 166 must decide what to do to execute the next skill in the first BOP, that is, the "fasten" skill 154 (cf. Figure 3). The "fasten" skill 154 requires a robotic arm 12. The Kanban unit 10 sees, within its subgroup, the first robotic arm 12, the second robotic arm 12 and a conveyor 14. Accordingly, and as will be explained with regard to Figure 6 in detail, the agent 100 of the Kanban unit 10 has several choices to select from. In this non-limiting example, path 30 with the highest efficiency is followed and the product is passed to the first robotic arm 12 which executes the "fasten" skill 154. Then, the agent of said first robotic arm 12 will look for the "label" skill 156. However, the first robotic arm 12 is, within its subgroup, only further connected to the third robotic arm 12 and the AGV fleet unit 18 and does not know which path leads to the "label" skill 156. Because the agent 100 of said second robotic arm 12 received feedback information 106, said agent knows that the most efficient path, which is given by the KPIs, leads to the third robotic arm 12. As two robotic arms 12 are passed, the more efficient arm may be selected here. The third robotic arm 12 is only connected to the second conveyor 14. Accordingly, the product is passed on to the second conveyor 14. Similarly, the second conveyor 14 is only connected to the second labeler 16, which may execute the required "label" skill 156. The second labeler 16 sees, within its subgroup, the third conveyor 14 and the second packager 20. Even though the obvious choice for the subsequent required "box" skill 158 would be the second packager 20, the agent 100 of the second labeler 16 has learned through feedback information 106 that passing the product to the third conveyor 14 is the most efficient path, at least in light of the given KPIs. Consequently, the product is passed to the third conveyor 14. The third conveyor sees, within its subgroup, only one other production unit, that is the first packager 20, which then executes the "box" skill 158. The first packager 20 sees, within its subgroup, the first loading bay 22 and the fourth robotic arm 12. Here, the optimal choice is also the obvious choice, that is, the "store" skill may be executed by the first loading bay 22. Thereby, the first bill of process 162 is executed and the product is finished. The steps are repeated for any number of required products. However, the paths may change according to the provided feedback information 106 based on the applied KPIs.

Figure 4 illustrates a second bill of process 164 for a product of a second type and associated production units. For this non-limiting example, all explanations regarding the shopfloor and the production units 166 apply accordingly. In comparison to the first bill of process 162, an additional "fasten" skill 154 is required after the "label" skill 156. For example, the produced label should now be covered by a protective screen. That is, the product of the second type may be a variation of the product of the first type, or may be a completely or mainly new product. Referring to the shopfloor of Figure 2, the second bill of process 164 might be executed by following path 32, so that after the second labeler 16, the product is passed through the second packager 20 and to the fifth robotic arm 12, which may execute the "fasten" skill 154. Thereafter, the product may be passed on to the first of second packager 20 and subsequently to the first or second loading bay 22. Then, the second bill of process 164 is completed and the product of the second type is finished.

Figure 6 illustrates an overview of agent's 100 decision making, that is, the machine learning process over time, that is, over several iterations, when a required skill is found in the neighborhood or subgroup. All of the previous explanations apply accordingly. Proceeding in the example as started above, the agent 100 residing on the Kanban unit 10 has the product and must decide, considering the next required skill from the BOP and the given KPIs, the product's next step. As a non-limiting example, here, the "fasten" skill 154 is considered as the required skill in the BOP which is a skill which can only be performed by a robotic arm unit 12. For further explaining the decision-making process, the agent's 100 learning process is shown in Figure 6. Here, four different production runs are analyzed at different points in time, that is, P=0, P=10, P=50, and P=100. The numbers indicate the amount of iterations or, in other words, how many products of this type have been produced already. This non-limiting example illustrates, in a simplified context, one of the many scenarios in which the agents' 100 actions drive the production process and how the agents learn from feedback information 106 regarding said actions. The agent 100 has no experience at P=0 and gradually learns from experience in the following production runs. At P=0, intuitively, the optimal choice appears to be for the agent 100 of the Kanban unit 10 to release the product to one of the robotic arm units 12 which can perform the required "fasten" skill 154 efficiently. In some cases, the decision outcome may indeed be this straightforward. However, to arrive at that outcome, the agent 100 solves at least an NP-hard problem. The agents 100 cannot solve the problem in polynomial time because they are acting in dynamic environments and have limited knowledge. Since they are constantly learning, in the decision process they can consider and expand their knowledge based on the feedback received at the end of the production process. Hence, the agent 100 may make decisions which may appear counterintuitive given the limited local context (see P=100), but which, based on their experience based on the feedback information 106 quantifying the performance of its previous decisions on the total efficiency of previous production runs combined with the current state of its environment, will lead to overall optimal production paths.

When the agent's 100 experience is zero (P=0) and for every production run, the agent 100 has many choices. It might either choose to perform a "defer" 170 or "buffer" skill 174 or choose the "transport" skill 172. This agent 100 is in its first production run for the current product, with no experience, and therefore, it can only take a random decision from the options: "defer" 170, "buffer" 174, "transport to robotic arm unit (top)", "transport to conveyor" or "transport to robotic arm unit (bottom)". In Figure 6, at P=0, the agent 100 randomly decides to send the product to the conveyor 14 (solid line). It is possible that in some situations choosing the conveyor 14 is the efficient choice. Nonetheless, there are two production units in the vicinity, that is, an efficient robotic arm unit 12c (top unit) and an inefficient robot arm 12a (bottom unit) that can perform the required skill and might be the optimal choice at least when the agent 100 has low experience. The agent 100 learns from the feedback information 106 received for this action which likely consists of a penalty indicating the low quality of the undertaken action. This negative feedback improves the agent's decision capabilities for future production runs. When the agent's 100 experience is at P=10, that is after multiple production runs, based on its accumulated experience, the agent 100 decides to transport the product to the efficient robotic arm unit 12c (solid line) - the agent 100 learned that the product requires the "fasten" skill 154 and this skill is available only on robotic arm units 12. Thus, the destination must be one of the two robotic arm units 12. In this example, the efficient robotic arm unit 12c is chosen. For this action, the agent 100 receives positive feedback. In conclusion, up to this production run, the agent 100 has improved and it is capable of choosing the optimal solution when the skill is in the vicinity. However, this local optimum might not lead to an optimal production path. There may be cases in which the agent 100 will again receive negative feedback (of different magnitude than at P=0).

When the agent's 100 experience is at P=50, the agent 100 faces a new scenario that triggers a new learning leap. In this situation, both robotic arm units 12b, 12b have the same, average efficiency level. As a result, the agent 100 must decide what option is best: (i) use the "defer" skill 170 and wait for one of the robotic arm units to go back to efficient, (ii) choose the conveyor unit 14 because it may lead to a more efficient path than simply using one of the two available robotic arm units 12b, 12b, or (iii) choose either of the robotic arm units 12b, 12b regardless of their current medium efficiency. In this case there is no clear optimal choice without considering the agents experience and previous production path feedback the agent 100 received. Since the agent 100 still lacks experience, it must consider all of the available information and choose accordingly. From this perspective, with the limited available information, all three choices are viable and, therefore, the agent 100 will receive slightly positive feedback regardless of its choice (not necessarily of equal magnitude for each choice, due to possible slight differences between the production units 166). Figure 6 shows the agent's 100 decision at P=50, that is, choosing "defer" 170 in an attempt to wait for a unit to become more efficient (solid line). It is worthy to note that, in this scenario, the choice is not a trivial one - without knowing more information than the one locally available in the subgroup as seen in the figure. It can neither be determined nor inferred which one of the three choices is the most efficient.

When the agent's 100 experience is at P=100, many more iterations have passed and by now the agent 100 has accumulated the experience to understand the impact of all relevant factors, that is, the required skill, the production units 166 states, the current load state, and the previous feedback information 106 received for all the finished production paths. In this production run it can recognize all the factors and makes the optimal decision to send the product to the robotic arm unit 12a (solid line), which is in a low efficient state. Even though, as previously mentioned, it may appear to be a bad decision - the agent 100 choosing the robotic arm unit 12a with low efficiency - the agent 100 knows from its now quite extensive experience that despite this inefficient machine being utilized, this production path has a higher chance of being overall better than the path that includes the robotic arm 12c with high efficiency. Such a decision is an example of the agent 100 reaching its training goal, that is, optimizing the overall production efficiency by collaborating with neighboring production units 166, even to the detriment of the apparent local efficiency, which is reinforced through positive feedback.

Fig. 7 illustrates an overview of an agent's 100 decision making over time when the required skill not in the neighborhood or not in the subgroup of a production unit 166. All previous explanations apply accordingly. In this non-limiting example an agent 100 must decide where to send the product when the sought "label" skill 156, is not available on the directly connected production units 166, but rather a few production units 166 away. There is one such decision point on all the paths 30, 32, 34, 36, 38 as shown in Figure 2, and here the one on path 30 with the highest efficiency is considered. In this setup, the "label" skill 156 can be performed only by a labeler 16 and there are no such units connected directly to the first robotic arm unit 12 on the product path 30 (Figure 2). However, there are two production units 166 that can perform this skill in the factory. One may be found three production units 166 away from the agent 100 of the first robotic arm unit 12 and another that is two production units 166 away from the said first robotic arm unit 12. In Figure 7, the dotted line and the number shows how many units are eluded from the figure. After this learning leap, the agents 100 will be able to adapt and find efficient decisions in either of the two scenarios presented (Figures 6 and 7). Furthermore, they are capable of making decisions in scenarios that represent a combination between the two. An example of this is the "box" skill 158 executed by the first packager 20 on path 30. Even though the labeler 16 on path 30 has a packager 20 connected to it, which could execute the required "box" skill 158, the agent 100 of the labeler 16 has learned that choosing the conveyor 14 is the most efficient choice, through feedback information 106 which is considering the KPIs.

Figure 8 illustrates a method according to the present invention. The explanations above apply accordingly. In this figure, two consecutive cycles and corresponding possible paths for the product are explained. Firstly, a first product of a first type is present at a first production unit ("1^{st} PU"). In a first step S110, in a first production cycle, a first process skill is executed by the first production unit to a first product of the first type. The skill to be executed is defined in the BOP. In the next step S120, in the first production cycle ("Cycle 1"), the product is transferred from the first production unit to a second production unit ("2^{nd} PU") within the subgroup of production units of the first production unit. The subgroup is indicated by a curly bracket and comprises, in this non-limiting example, the first, second, third and fourth production unit. The first production unit may select either of the other production units within its subgroup. In the next step S130, in the first production cycle, a second process skill is executed by the second production unit to the first product of the first type. In following step S140, feedback information 106 is received by the first production unit, based on at least one key performance indicator. The AI may learn from said feedback information 106. The first cycle for the first production unit is finished. In the next cycle, within the same subgroup of production units, firstly, the first process skill is executed (step S150) by the first production unit to a second product of the first type. Then, the AI 102 of the first production unit selects (step S160), by using said feedback information 106, one of the plurality of production units 166 from said subgroup. The selection may be the same or may be different from the first cycle. In step S170, in the second production cycle, a second product is transferred from the first production unit to the selected production unit ("3rd PU"). In step S180, in the second production cycle, a process skill of the selected production unit is applied to the second product. Accordingly, also after the second cycle, feedback information 106 may be given to the first production unit. Thereby, the experience of the agent 100 of the first production unit increases gradually. The first product and the second product are of the same type and the numbering relates to the sequence of production. After those two production cycles, the agent 100 of the first production unit, that is the AI 102 comprised by the agent 100, has gained experience from the feedback information 106. In the first cycle, after the product has reached the second production unit, another subgroup of the second production unit may proceed according to this example, but with potentially other production units. However, in some cases, it might be efficient to transfer the product back to a previous production unit.

Regarding the AI with reinforced learning capabilities, preferably, an Proximal Policy Optimization (PPO) algorithm may be used. The PPO algorithm has the advantage that is sample efficient and provides stability. Alternatively, an Deep Q-Network (DQN) algorithm may be used. The DQN algorithm has the advantage to generalize the learned policies to unseen states. Further alternatively, a Soft Actor Critic (SAC) algorithm may be used. However, the invention is not limited thereto, and any other suitable neural network may be used.

The input for training the AI with reinforced learning capabilities may be dependent on the KPIs. As mentioned above, feedback is provided to the AI. The feedback may be based on at least one of quality, performance, time, energy efficiency and cost. For example, if a decision of an AI resulted in a quicker production, and a KPI is production speed, feedback may be provided to said AI. Said feedback may be the input for the AI with reinforced learning capabilities. The same applies to any other KPIs. Accordingly, the AI may be trained according to various requirements.

### References List

- 10: Kanban unit
- 12: robotic arm
- 12a: robotic arm unit, low efficiency
- 12b: robotic arm unit, medium efficiency
- 12c: robotic arm unit, high efficiency
- 14: conveyor
- 16: labeler
- 16a: labeler arm, low efficiency
- 16b: labeler arm, medium efficiency
- 16c: labeler arm, high efficiency
- 18: fleet unit
- 20: packager
- 22: loading bay
- 24: laser engraver
- 30: path with highest efficiency
- 32: path with medium high efficiency
- 34: path with medium efficiency
- 36: path with medium low efficiency
- 38: path with low efficiency
- 40: connection link
- 100: agent
- 102: AI
- 104: reward unit
- 106: feedback information
- 108: state information
- 110: actions/commands
- 112: controller
- 114: sensor
- 116: first robot
- 118: second robot
- 120: third robot
- 122: first processing device
- 124: second processing device
- 152: supply
- 154: fasten
- 156: label

- 158: box
- 160: store
- 162: first bill of process skills
- 164: second bill of process skills
- 166: production unit
- 168: product routing skills
- 170: defer
- 172: transport
- 174: buffer
- 180: subgroup
- 200: environment
- 300: system

## Claims

1. A method for producing a plurality of products by executing a plurality of production cycles, wherein, in each production cycle, a plurality of skills of a bill of process are executed by a plurality of production units (166), wherein each of the plurality of production units (166) is automatically associated with an AI (102) with reinforced learning capabilities,
wherein each of the plurality of production units (166) is adapted to only handle the product within a respective subgroup among the plurality of production units (166), the method comprising:
- Executing (S110), in a first production cycle, a first process skill by a first production unit to a first product of a first type;
- Transferring (S120), in the first production cycle, the first product of the first type from the first production unit to a second production unit within the respective subgroup;
- Executing (S130), in the first production cycle, a second process skill by the second production unit to the first product of the first type;
- Receiving (S140), by the first production unit, feedback information (106) based on at least one key performance indicator;
- Executing (S150), in a second, subsequent production cycle, the first process skill by the first production unit to a second product of the first type;
- Selecting (S160), by using the feedback information (106) and by using the AI (102) of the first production unit, one of the plurality of production units (166) from the respective subgroup;
- Transferring (S170), in the second production cycle, the second product of the first type from the first production unit to the selected production unit; and
- Executing (S180), in the second production cycle, a process skill of the selected production unit to the second product of the first type.

2. The method according to the preceding claim, wherein the feedback information (106) is provided based on a plurality of key performance indicators.

3. The method according to one of the preceding claims, wherein the key performance indicator may change.

4. The method according to one of the preceding claims, wherein the product, when transferred between production units (166) follows a path and the path changes dependent on a condition of a production unit (166) on the path.

5. A system (300) for industrial production of a product of a first type requiring a first bill of process (162), comprising:
- a plurality of production units (166) to work the first bill of process (162);
- an AI (102) for each of the plurality of production units (166) having reinforced learning capabilities;
wherein feedback information (106) is provided to at least one of the AIs (102) of the plurality of production units (166);
wherein each of the plurality of production units (166) is adapted to only handle the product within a respective subgroup among the plurality of production units (166), and
wherein the AI (102) is configured to control the associated production unit (166) based on said feedback information (106).

6. The system (300) according to the preceding claim, wherein feedback information (106) is provided to all AIs (102) of the plurality of production units.

7. The system (300) according to one of the preceding claims, wherein the AI (102) is configured to learn from the reward information (106) thereby influencing the control of the AI (102) of the associated production unit (166).

8. The system (300) according to one of the preceding claims, wherein a skill is assigned to the production unit (166) selected from a group comprising at least production and routing.

9. The system (300) according to the preceding claim, wherein each production unit (166) is configured to execute the skills deferring, transporting and/or buffering.

10. The system (300) according to one of the preceding claims, wherein the production unit (166) is selected from one of the group comprising: robotic arm (12), conveyor (14), labeler (16), packager (20), laser engraver (24), loading bay (22), mill, Kanban (10), AGV fleet unit (18).

11. The system (300) according to one of the preceding claims, wherein the system (300) is capable of producing a product of a second type, the product of the second type being different of the product of the first type.

12. The system (300) according to the preceding claim, wherein the product of the second type is produced according to a second bill of process (164), the second bill of process (164) being different from the first bill of process (162).

13. The system (300) according to the preceding claim, wherein a plurality of production units (166) used for the first bill of process (162) are used for the second bill of process (164).

14. The system (300) according to the preceding two claims, wherein all production units (166) used for the first bill of process (162) are used for the second bill of process (164).
